# EUROPEAN PATENT APPLICATION

(11) **EP 1 426 349 A1**
(43) Date of publication of application: **09.06.2004**
(21) Application number: 02765548.9
(22) Date of filing: 13.09.2002
(51) Int. Cl.: C04B 24/26, C04B 24/38, C04B 28/02

(54) **ADDITIVE FOR CEMENT COMPOSITION AND CEMENT COMPOSITION CONTAINING THE SAME**

(30) Priority: 14.09.2001 JP 2001279616
(71) Applicant: NMB LTD., Tokyo 106-0032 (JP); Shin-Etsu Chemical Co., Ltd., Chiyoda-ku, Tokyo 100-0004 (JP)
(72) Inventor: OKAZAWA, Satoshi c/o NMB LTD. Central Research Lab, Chigasaki-shi, Kanagawa 253-0071 (JP); YAGUCHI, Minoru c/o NMB LTD. Central Research Lab., Chigasaki-shi, Kanagawa 253-0071 (JP); YAMAKAWA, Tsutomu c/o Shin- Etsu Chemical Ldt., Nakakubiki (JP); SASAGE, Yoshiaki c/o Shin-Etsu Chemical Co. Ltd., Nakakubiki (JP)
(74) Representative: Stoner, Gerard Patrick
(86) International application number: PCT/JP2002/009458
(87) International publication number: WO 2003/024884

(57) **Abstract**

An additive for a cement composition comprising:
(A) a polycarboxylic acid based copolymer and/or a salt thereof;
(B) water-soluble cellulose ether; and
(C) a defoaming agent.

## Description

### TECHNICAL FIELD

The present invention relates to an additive for a cement composition (such as paste, mortar, and concrete) and a cement composition containing the same. More particularly, the present invention relates to an additive for a cement composition and a cement composition containing the same, the additive being intended to prevent a cement composition from bleeding, to improve the workability of a cement composition, to secure resistance to material separation, and to reduce dust and splash during concrete spraying, the additive being also superior in long-term storage stability.

### BACKGROUND ART

Various kinds of concrete have problems with bleeding and workability or present difficulties in pump pushing and placing depending on mixing and materials used. In addition, highly flowable concrete needs resistance to material separation and spraying concrete requires less dusting and splashing.

A conventional way to address this problem was to use two additives in combination -- water reducing agent and cellulose ether. The latter is a powder of water-soluble cellulose ether, which needs a complex procedure for addition, gives off dust, and increases labor cost. Another disadvantage of water-soluble cellulose ether in powder form is that it needs complex control during storage at a work site so that it will not give undissolved lumps due to water or moisture absorption and that it does not mix uniformly with concrete when added by means of an automatic measuring device.

A method of using a liquid admixture which is prepared by dissolving water-soluble cellulose ether, in a powder form, in a water reducing agent, in order to reduce dust which occurs during application of spraying concrete, is disclosed in Japanese Patent Laid-open No. Hei 5-105493. The disclosed method is effective in reducing dust and splash during concrete spraying and permits the quick setting agent to work effectively and improves long-term compressive strength. However, the method suffers the disadvantage that the admixture greatly increases in viscosity during storage and eventually forms gel after storage for a long time. The resulting gel clogs the strainer, making it difficult to handle with an ordinary measuring device.

### DISCLOSURE OF THE INVENTION

It is an object of the present invention to provide an additive for a cement composition which is used to improve pump pushing characteristics, to prevent bleeding, to improve workability, to secure resistance to material separation, and to reduce dust and splash during concrete spraying, and also to provide a cement composition containing the additive. The additive of the present invention is characterized by its good storage stability which does not permit viscosity increase and gelation even after storage for a long time.

In order to solve the above-mentioned problems, the present inventors carried out extensive studies which led to the finding that an additive for a cement composition containing a polycarboxylic acid based copolymer and/or a salt thereof, water-soluble cellulose ether, and defoaming agent produces, when added to a cement composition, a profound effect of preventing bleeding, improving workability, securing resistance to material separation, and reducing dust and splash during concrete spraying. In addition, the additive has an excellent long-term storage stability. The present invention is based on this finding.

The present invention provides an additive for a cement composition and a cement composition containing the same, which are defined as follows:
(1) An additive for a cement composition including:
   (A) a polycarboxylic acid based copolymer and/or a salt thereof,
   (B) water-soluble cellulose ether, and
   (C) a defoaming agent.
(2) An additive for a cement composition as defined in (1) above, wherein the polycarboxylic acid based copolymer as component (A) is a copolymer composed of an unsaturated mono- or di-carboxylic acid and a copolymerizable unsaturated monomer.
(3) An additive for a cement composition as defined in (2) above, wherein the unsaturated monomer is an unsaturated polyalkylene glycol ether based monomer and/or unsaturated polyalkylene glycol ester based monomer.
(4) An additive for a cement composition as defined in any one of (1) to (3) above, wherein the water-soluble cellulose ether as component (B) is one selected from alkyl cellulose, hydroxyalkyl cellulose, and hydroxyalkyl alkyl cellulose.
(5) A cement composition including an additive for a cement composition defined in any one of (1) to (4) above.

### BEST MODE FOR CARRYING OUT THE INVENTION

The invention will be described in more detail in the following.

Component (A) of the additive for a cement composition is a liquid polycarboxylic acid based copolymer and/or a salt thereof. The polycarboxylic acid based copolymer should preferably be a copolymer composed of an unsaturated mono- or di-carboxylic acid and a copolymerizable unsaturated monomer. Examples of the unsaturated mono- or di-carboxylic acid include acrylic acid, methacrylic acid, crotonic acid, maleic acid, fumaric acid, itaconic acid, citraconic acid, and the like. Examples of the unsaturated monomer include polyalkylene glycol mono(meth)acrylate (such as triethylene glycol monoacrylate and polyethylene glycol monoacrylate, with polyethylene glycol having a weight-average molecular weight of 200-1000), styrene, and those compounds which are formed by adding 1-100 mol of alkylene oxide to an unsaturated alcohol (such as 3-methyl-2-buten-1-ol, 3-methyl-2-buten-1-ol, and 2-methyl-3-buten-2-ol). Examples of the salt of polycarboxylic acid based copolymer include those which contain Na, K, Mg, Zn, Al, Fe, ammonium, etc. as the base.

The above-mentioned copolymer and its salt should preferably have a molecular weight (weight-average molecular weight) of 5,000-200,000 in terms of polyethylene glycol.

The polycarboxylic acid based copolymer and/or its salt should be added in an amount of 0.05-10.0 wt%, preferably 0.1-2.5 wt%, of the weight of cement. If the amount added is less than 0.05 wt%, the resulting cement composition will not exhibit the desired flowability. If the amount added exceeds 10.0 wt%, the resulting cement composition will suffer material separation.

The water-soluble cellulose ether as component (B) in the present invention includes, for example, alkyl cellulose (such as methyl cellulose), hydroxyalkyl cellulose (such as hydroxyethyl cellulose), and hydroxyalkyl alkyl cellulose (such as hydroxypropyl methyl cellulose). It should preferably have a solution viscosity of 50-300,000 mPa·s, particularly 1,000-100,000 mPa·s (for 2.0 wt% aqueous solution at 20°C). If the solution viscosity is lower than 50 mPa·s, the additive will not secure resistance to material separation. If the solution viscosity is higher than 300,000 mPa·s, the additive will suffer economical disadvantage for industrial production.

The mixing ratio of the polycarboxylic acid based copolymer and/or salt thereof and the water-soluble cellulose ether should preferably be 50/50 to 99/1 by weight. If the mixing ratio is lower than 50/50, the resulting concrete will have a very high viscosity, lacking the desired flowability. In addition, the cellulose ether may retard setting. On the other hand, if the mixing ratio exceeds 99/1, the additive will not produce the effects of preventing bleeding, improving workability, securing resistance to material separation (in the case of highly flowable concrete), and reducing dust and splash during concrete spraying.

The amount of the water-soluble cellulose ether to be added should be 0.001-5.0 wt%, preferably 0.005-2.5 wt%, of the weight of cement. If the amount is less than 0.001 wt%, the resulting concrete will suffer material separation. If the amount exceeds 5.0 wt%, the resulting concrete is poor in flowability and slow in setting.

The defoaming agent as component (C) in the present invention includes ethylene oxide-propylene oxide block copolymers, alkylene glycols, alkylene glycol derivatives such as EO (ethylene oxide) and/or PO (propylene oxide) additives of the alkylene glycols, alkylene glycol higher alcohol ethers, higher fatty acid esters, alkylene glycol fatty acid esters, sorbitan fatty acid esters, polyoxyalkylene sorbitan fatty acid esters, acetylene glycols, acetylene glycol derivatives such as EO and/or PO additives of acetylene glycols, phosphates such as tributylphosphates and sodium octyl phosphate, etc., and should preferably be one which contains a polyether based component. It may be in the form of either liquid or powder. It is commercially available under a trade name of Disfoam (from NOF CORPORATION), LEOCON (from Lion Corporation), EMASOL (from Kao Corp.), Defoamer and Dappo (from San Nopco Limited), Agitan (from MUNZING CHEMIE GmbH), and PULRONIC, TETRONIC, ADEKANOL, ADEKANATE (from Asahi Denka Kogyo K.K.) and SURFYNOL 440 and 465 (Nisshin Chemical Industry K.K.). Any other defoaming agents containing a polyether based component may be used.

The amount of the defoaming agent to be added should preferably be 0.1-50 wt%, particularly 3-20 wt%, for the weight of the water-soluble cellulose ether. With an amount less than specified above, the defoaming agent does not produce its effect, with the result that the water-soluble cellulose ether possibly precipitates, forming hard gel, in the polycarboxylic acid based copolymer or a salt thereof. With an amount more than specified above, the defoaming agent does not produce any additional effect of dispersing the water-soluble cellulose ether in the polycarboxylic acid based copolymer or the salt thereof. Excess defoaming agent is wasted and has possibly an adverse effect on concrete containing a water reducing agent, greatly reducing the air content in concrete and weakening the effect of air-entraining agents.

There is no significant difference in effect regardless of the order in which the water-soluble cellulose ether and defoaming agent are added to the polycarboxylic acid based copolymer or a salt thereof. They may be added simultaneously or separately or mixed in the polycarboxylic acid based copolymer or a salt thereof.

The cement composition of the present invention contains ordinary components or hydraulic compounds, such as cement and gypsum, as well as the above-mentioned additive. Examples of the cement include normal portland cement, portland blast furnace cement, high-early-strength portland cement, fly ash cement, and alumina cement. Examples of the gypsum include dihydrate gypsum and hemihydrate gypsum. The hydraulic compounds may be added as much as necessary for desired strength.

The cement composition of the present invention may be incorporated with aggregate according to need. Examples of the aggregate include not only ordinary ones for cement mortal and concrete but also light-weight aggregate such as pearlite, vermiculite, and fly ash. The aggregate may be added as much as necessary for desired performance.

The cement composition of the present invention may optionally contain, in addition to the above-mentioned additive for cement compositions, any of ordinary water reducing agent (such as lignin sulfonic acid based water reducing agent, melamine sulfonic acid based water reducing agent, and naphthalene sulfonic acid based water reducing agent), air-entraining agent, setting accelerator, setting retarder, shrinkage-reducing agent, rust inhibitor, and quick setting agent.

For example, lignin sulfonic acid based water reducing agents include Pozzolith No. 70 (from Pozzolith Bussan Ltd.), Sun-Flow KS (from Sun-Flow), and Vinsol 90 (from Yamaso Chemical Co., Ltd.) Melamine sulfonic acid based water reducing agents include Leobuild 4000 (from Pozzolith Bussan Ltd.) Naphthalene sulfonic acid based water reducing agents include Leobuild SP9N (from Pozzolith Bussan Ltd.) and Mighty 150 (from Kao Corp.) Air-entraining agent include Microair 303A (from Pozzolith Bussan Ltd.), Vinsol (from Yamaso Chemical Co., Ltd.), and Paric AE (from FUJISAWA PHARMACEUTICAL CO., LTD.) Setting accelerator includes calcium chloride, nitrate, and nitrite. Setting retarder includes sucrose, gluconic acid, phosphonate, and phosphate. Shrinkage-reducing agents include Tetraguard (from TAIHEIYO CEMENT CORP.) Rust inhibitors include NR1900 (from Pozzolith Bussan Ltd.) Quick setting agents include QP-88 (Pozzolith Bussan Ltd.)

The amount of these additives should preferably be 0.0001-10 wt% for the weight of the cement composition of the present invention.

The amount of the additive for a cement composition in the cement composition of the present invention should be 0.5-3.5 wt%, preferably 1.0-2.5 wt%, (in terms of solids) which is sufficient for desired performance.

### EXAMPLE

The invention will be described in more detail with reference to the following Examples and Comparative Examples, which are not intended to restrict the scope of the invention. Incidentally, the viscosity shown below is the one measured at 25°C.

### Examples 1 to 10 and Comparative Example 1

An additive for cement compositions was prepared from polycarboxylic acid based copolymer or salt thereof (shown in Table 1), water-soluble cellulose ether and defoaming agent (both shown in Table 2) according to the formulation shown in Table 3.

The thus obtained additive was examined for viscosity and solution stability in the following manner. The results are shown in Table 3.

### (Viscosity Evaluation)

Viscosity (at 20°C) of each additive for a cement composition was measured by using a Model B rotational viscometer and was rated as follows.
A: Capable of easy handling (lower than 70 mPa·s)
B: Capable of handling (not lower than 70 mPa·s and lower than 150 mPa·s)
C: Incapable of handling (150 mPa·s or more)

### (Solution Stability)

A solution of the additive was allowed to stand for 3 months and the appearance was visually inspected. The result of observation was rated as follows.
A: Good
B: Fair
C: Gelation

**Table 1**

| Polycarboxylic acid based copolymer or salt thereof | | |
|---|---|---|
| | Monomers | Weight-average molecular weight (in terms of PEG) |
| P-1 | Acrylic acid and polyethylene glycol monoacrylate (EO = 12) | 27,500 |
| P-2 | Acrylic acid and polyethylene glycol monomaleate (EO = 12) | 30,700 |
| P-3 | Acrylic acid and polyethylene glycol monoallyl ether (EO = 12) | 25,800 |
| P-4 | Maleic acid and adduct of 3-methyl-2-buten-1-ol and polyethylene glycol (EO = 25) | 37,000 |
| P-5 | Maleic acid, styrene, and polyethylene glycol monomaleate (EO = 12) | 42,000 |
| EO: Number of moles of ethylene oxide added | | |

**Table 2**

| | Water-soluble cellulose ether | | Defoaming agent | |
|---|---|---|---|---|
| | Designation | Amount added (wt%) | Designation | Amount added (wt%) |
| C-1 | 90SH-30000 | 85.0 | SN-14HP | 15.0 |
| C-2 | 90SH-30000 | 80.0 | Pulronic L-61 | 20.0 |
| C-3 | SNB-30T | 90.0 | ADEKANATE B-107F | 10.0 |
| C-4 | 90SH-30000 | 90.0 | AGITAN P803 | 10.0 |
| C-5 | 90SH-30000 | 100.0 | Not added | 0 |
| Remarks: 90SH-30000: from Shin-Etsu Chemical Co., Ltd. Hydroxypropyl methyl cellulose Viscosity of 2 wt% solution: 27,800 mPa·s SNB-30T: from Shin-Etsu Chemical Co., Ltd. Hydroxyethyl methyl cellulose Viscosity of 2 wt% solution: 31,000 mPa·s SN-14 HP: from San Nopco Limited Pulronic L-61: from Asahi Denka Kogyo K.K. ADEKANATE B-107F: from Asahi Denka Kogyo K.K. AGITAN P803: from MUNZING CHEMIE GmbH | | | | |

**Table 3**

| | Polycarboxylic acid based copolymer | | Water-soluble cellulose ether defoaming agent | | Cement additive | Viscosity (mPa·s) | Rating of viscosity | Solution stability |
|---|---|---|---|---|---|---|---|---|
| | Designation | Mixing ratio (wt%) | Designation | Mixing ratio (wt%) | | | | |
| Example 1 | P-1 | 90 | C-1 | 10 | AD-1 | 42 | A | A |
| Example 2 | P-1 | 80 | C-1 | 20 | AD-2 | 54 | A | A |
| Example 3 | P-1 | 55 | C-1 | 45 | AD-3 | 82 | B | A |
| Example 4 | P-2 | 80 | C-1 | 20 | AD-4 | 59 | A | A |
| Example 5 | P-3 | 80 | C-1 | 20 | AD-5 | 60 | A | A |
| Example 6 | P-4 | 80 | C-1 | 20 | AD-6 | 60 | A | A |
| Example 7 | P-5 | 80 | C-1 | 20 | AD-7 | 74 | B | A |
| Example 8 | P-1 | 90 | C-2 | 10 | AD-8 | 50 | A | A |
| Example 9 | P-1 | 90 | C-3 | 10 | AD-9 | 58 | A | A |
| Example 10 | P-1 | 90 | C-4 | 10 | AD-10 | 48 | A | A |
| Comparative Example 1 | P-1 | 90 | C-5 | 10 | AD-11 | 43 | A | C |

### Examples 11 to 20 and Comparative Example 2

Each of the cement additives prepared in the above-mentioned examples was tested for the effect of preventing bleeding and improving workability by actually adding to cement compositions mixed according to the formulation shown in Table 4. The amount of bleeding was measured by using a concrete sample having an intended slump value of 21 cm and an intended air content of 4.5%. Improvement in workability was evaluated by visual observation. The results are shown in Table 5. The materials and test methods used in each example are as follows.

### Cement Composition

- (a) Cement:: Normal portland cement, an equal amount blend of
three brands from TAIHEIYO CEMENT CORP.,
UBE-MITSUBISHI CEMENT CORPORATION, and Sumitomo
Osaka Cement Co., Ltd.
- (b) Fine aggregate:: Inland sand from Oi-gawa River
[water absorption: 2.29%, density; 2.57, fineness modulus: 2.81%]
- (c) Coarse aggregate:: Hard crushed sandstone from Oume
[water absorption: 2.05%, specific gravity: 2.61, fineness modulus: 6.62%, maximum size: 10 mm]
Measurement of slump: according to JIS A-1101
Measurement of air content: according to JIS A-1128

### Rating of Effect of Improving Workability

A: Good
B: Poor

### Rating of Effect of Preventing Bleeding

A: Less than 0.010 cm³/cm²
B: 0.010 cm³/cm² or more

**Table 4**

| Water-cement ratio (wt%) | Fine aggregate ratio (volume%) | Unit quantity (kg/m³) | | | | |
|---|---|---|---|---|---|---|
| | | Mixing water | Cement | Fine aggregate | Coarse aggregate | Cement additive |
| 50.0 | 48.0 | 170 | 340 | 835 | 933 | 3.90 |

**Table 5**

| | Cement additive | Effect of improving workability | Amount of bleeding (cm³/cm²) | Effect of preventing bleeding |
|---|---|---|---|---|
| Example 11 | AD-1 | A | 0.025 | B |
| Example 12 | AD-2 | A | 0.010 | B |
| Example 13 | AD-3 | A | 0.002 | A |
| Example 14 | AD-4 | A | 0.009 | A |
| Example 15 | AD-5 | A | 0.011 | B |
| Example 16 | AD-6 | A | 0.010 | B |
| Example 17 | AD-7 | A | 0.008 | A |
| Example 18 | AD-8 | A | 0.028 | B |
| Example 19 | AD-9 | A | 0.023 | B |
| Example 20 | AD-10 | A | 0.020 | B |
| Comparative Example 2 | AD-11 | B | 0.021 | B |

### Examples 21 and 22 and Comparative Example 3

The cement composition incorporated with the above-mentioned cement additive was examined for the effect of reducing material separation. Concrete samples were prepared according to the formulation shown in Table 6. The slump flow and air content were measured. Material separation was visually observed and rated as follows. The results are shown in Table 7.

### Rating of Material Separation

A: No separation
B: Slight separation with some gravels remaining at the center
C: Apparent separation

**Table 6**

| Water-cement ratio (wt%) | Fine aggregate ratio (volume%) | Unit quantity (kg/m³) | | | |
|---|---|---|---|---|---|
| | | Mixing water | Cement | Fine aggregate | Coarse aggregate |
| 44.2 | 46 | 168 | 380 | 789 | 969 |

**Table 7**

| | Cement additive | Amount added (Cx%) | Slump flow (cm) | Air content (%) | Resistance to material separation |
|---|---|---|---|---|---|
| Example 21 | AD-2 | 1.8 | 63.5 | 4.5 | A |
| Example 22 | AD-3 | 1.8 | 64.0 | 4.5 | A |
| Comparative Example 3 | P-1 | 1.8 | 64.5 | 4.5 | C |
| Remarks: Cx% denotes wt% based on cement. | | | | | |

### Examples 23 and 24 and Comparative Example 4

The cement composition incorporated with the above-mentioned cement additive was examined for the effect of preventing dust and splash. Concrete samples were prepared according to the formulation shown in Table 8. The effect of preventing dust and splash slump was examined in the following way. The results are shown in Table 9.

### Measurement of Dust Concentration And Splash Rate

### Spray test:

Concrete spraying was performed as follows on a simulated vault tunnel measuring 2.5 meters high, 3.5 meters wide, and 5.0 meters deep.
Sprayer: Lead gun (made by Plibrico Japan Co., Ltd.)
Mixer: Tilting type with a capacity of 200 liters
Spray pressure: 2.5-3.0 kg/cm²
Spray position: Obliquely upward, one meter away from the wall. The sprayed wall is four meters away from the tunnel entrance.

### Measurement of Dust Concentration:

Three minutes after the start of spraying, dust concentration (count/min) was measured every 30 seconds using a dust meter (made by Shibata Kagaku Kikai Kogyosha). Measurements were carried out at two positions (1.5 meters apart, each one meter from the wall), three meters away from the spray position, with the tunnel entrance and exit closed.

### Measurement of Splash Rate:

Splashes were collected on a vinyl sheet laid under the spray position. The amount of collected splashes was measured, and the ratio of the amount of splashes to the total amount of sprayed concrete was calculated.

**Table 8**

| Water cement ratio (wt%) | Fine aggregate ratio (volume%) | Unit quantity (kg/m³) | | | | | |
|---|---|---|---|---|---|---|---|
| | | Mixing water | Cement | Fine aggregate | Coarse aggregate | Admixing agent | Quick setting agent |
| 50.0 | 52.0 | 182 | 364 | 919 | 875 | 3.64 | 2.18 |
| Remarks: Quick setting agent, QP-88 (from Pozzolith Busssan Ltd.) | | | | | | | |

**Table 9**

| | Cement additive | Amount added (Cx%) | Slump flow (cm) | Dust concentration (C/M) | Splash rate (%) | Effect of reducing dust and splash |
|---|---|---|---|---|---|---|
| Example 23 | AD-2 | 1.8 | 13.0 | 470 | 25.0 | Good |
| Example 24 | AD-3 | 1.8 | 14.0 | 360 | 22.0 | Good |
| Comparative Example 4 | P-1 | 1.2 | 15.0 | 850 | 35.0 | - |

It is apparent from the foregoing examples that the additive for cement compositions according to the present invention produces, when added to cement compositions such as paste, mortar, and concrete, the effect of reducing bleeding, improving workability, securing resistance to material separation, and decreasing dust and splash during concrete spraying, and also excels in long-term storage stability.

As described above, the additive for cement compositions including a polycarboxylic acid based copolymer, water-soluble cellulose ether, and a defoaming agent according to the present invention, produces, when added to cement compositions such as paste, mortar, and concrete, the effects of reducing bleeding, improving workability, securing resistance to material separation, and decreasing dust and splash during concrete spraying, and also excels in long-term storage stability.

## Claims

1. An additive for a cement composition comprising:
(A) a polycarboxylic acid based copolymer and/or a salt thereof;
(B) water-soluble cellulose ether; and
(C) a defoaming agent.

2. An additive for a cement composition as defined in claim 1, wherein the polycarboxylic acid based copolymer as component (A) is a copolymer composed of an unsaturated mono- or di-carboxylic acid and a copolymerizable unsaturated monomer.

3. An additive for a cement composition as defined in claim 2, wherein the unsaturated monomer is an unsaturated polyalkylene glycol ether based monomer and/or unsaturated polyalkylene glycol ester based monomer.

4. An additive for a cement composition as defined in any one of claims 1 to 3, wherein the water-soluble cellulose ether as component (B) is one selected from alkyl cellulose, hydroxyalkyl cellulose, and hydroxyalkyl alkyl cellulose.

5. A cement composition comprising an additive for a cement composition defined in any one of claims 1 to 4.
